(19) Europäisches Patentamt
European Patent Office
Office européen des brevets

(11) **EP 3 599 126 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(51) Int Cl.:
***B60L 13/00*** (2006.01)   ***B60L 13/03*** (2006.01)
***E01B 25/34*** (2006.01)   ***B65G 54/02*** (2006.01)
***B65G 43/02*** (2006.01)

(21) Anmeldenummer: **18185539.6**

(22) Anmeldetag: **25.07.2018**

(54) **VERFAHREN ZUM BETREIBEN EINES LANGSTATORLINEARMOTORS MIT WEICHE**

METHOD FOR OPERATING A LONG-STATOR LINEAR MOTOR WITH SWITCH

PROCÉDÉ DE FONCTIONNEMENT D'UN MOTEUR LINÉAIRE À STATOR LONG POURVU D'AIGUILLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.01.2020 Patentblatt 2020/05**

(73) Patentinhaber: **B&R Industrial Automation GmbH 5142 Eggelsberg (AT)**

(72) Erfinder:
• **Huber, Stefan 5020 Salzburg (AT)**
• **Walter, Dominic 5020 Salzburg (AT)**

• **Reichenwallner, Benjamin 5020 Salzburg (AT)**

(74) Vertreter: **Patentanwälte Pinter & Weiss OG Prinz-Eugen-Straße 70 1040 Wien (AT)**

(56) Entgegenhaltungen:
**EP-A1- 2 280 327    EP-A1- 2 639 187
EP-A1- 3 202 612    JP-A- H05 303 423**

• **P Jiménez ET AL: "Collision Detection Algorithms for Motion Planning Robot Motion Planning and Control" In: "Robot Motion Planning and Control", 1. Januar 1998 (1998-01-01), Springer, XP055546046, Bd. 229, Seiten 305-343, * das ganze Dokument ***

EP 3 599 126 B1

**Beschreibung**

Die gegenständliche Erfindung betrifft ein Verfahren zum Betreiben einer Fördereinrichtung in Form eines Langstatorlinearmotors mit einer Förderstrecke mit zumindest einer Weiche, mit der ein erster Förderabschnitt der Förderstrecke mit einem zweiten Förderabschnitt der Förderstrecke verbunden wird und der erste Förderabschnitt und der zweite Förderabschnitt im Bereich der Weiche ab einem Weichenbeginn divergieren, wobei entlang der Förderstrecke eine erste Transporteinheit und eine zweite Transporteinheit bewegt werden und zur Vermeidung von Kollisionen zwischen den ersten Transporteinheit und der zweiten Transporteinheit im Bereich der Weiche eine Kollisionszone festgelegt wird, in der Gefahr einer Kollision zwischen der ersten Transporteinheit und der zweiten Transporteinheit besteht.

Langstatorlinearmotoren werden oftmals als flexible Fördereinrichtungen in Herstellungs-, Bearbeitungs-, Montageanlagen, und ähnlichen Anlagen, verwendet. Ein Langstatorlinearmotor besteht bekanntermaßen im Wesentlichen aus einem Langstator in Form einer Vielzahl hintereinander angeordneter Antriebsspulen und einer Vielzahl von Transporteinheiten mit Erregungsmagneten (Permanent- oder Elektromagnete), die entlang des Langstators bewegt werden, indem die Antriebsspulen im Bereich einer Transporteinheit entsprechend mit einem elektrischen Strom beaufschlagt werden. Durch die Antriebsspulen wird ein bewegtes Magnetfeld erzeugt, das mit den Erregungsmagneten an den Transporteinheiten zusammenwirkt, um die Transporteinheiten zu bewegen. Durch den Langstator wird somit eine Förderstrecke ausgebildet, entlang der die Transporteinheiten bewegt werden können. Damit ist es möglich jede Transporteinheit einzeln und unabhängig voneinander in ihrer Bewegung (Position, Geschwindigkeit, Beschleunigung) zu regeln. Dazu kann jede für die Bewegung benötigte Antriebsspule durch einen zugeordneten Antriebsspulenregler angesteuert werden, der Vorgaben zur Bewegung einer Transporteinheit (z.B. in Form von Sollwerten für Position oder Geschwindigkeit) von einer übergeordneten Anlagensteuereinheit erhalten kann. Dabei können entlang der Förderstrecke auch Weichen des Langstatorlinearmotors vorgesehen sein, um eine Transporteinheit auf verschiedenen Transportabschnitten, die durch die Weiche verbunden sind, bewegen zu können. Oftmals ist der Langstator auch in Form von Fördersegmenten aufgebaut, wobei jedes Fördersegment einen Teil der Förderstrecke bildet und eine Anzahl von Antriebsspulen enthält. Meistens ist für ein Fördersegment ein Segmentregler vorgesehen, der alle Antriebsspulen des Fördersegments regelt, beispielsweise mittels untergeordneter Spulenregler pro Antriebsspule. Es können auch nahezu beliebige Förderstrecken ausgebildet sein, beispielsweise mit Geraden, Kurven, geschlossenen Bahnen, usw. Die konstruktive Ausgestaltung des Langstatorlinearmotors, also z.B. die Ausführung der Antriebsspulen, der Förderstrecke, der Transporteinheiten, der Führungen der Transporteinheit, usw., und das Regelungskonzept können natürlich verschieden sein, wobei das grundlegende Funktionsprinzip eines Langstatorlinearmotors aber gleich bleibt.

Eine Fördereinrichtung in Form eines Langstatorlinearmotors kann durchaus komplex werden, auch mit mehreren Transportabschnitten, die durch Weichen miteinander verbunden sein können. Darauf können auch eine hohe Anzahl von Transporteinheiten gleichzeitig bewegt werden. Eine solche Fördereinrichtung stellt damit hohe Anforderungen an die Steuerung der Bewegung der einzelnen Transporteinheiten. Insbesondere müssen in der Regel Vorkehrungen getroffen werden, dass einzelne Transporteinheiten während deren Bewegung nicht miteinander kollidieren. Im Bereich von Weichen ergeben sich dabei besondere Anforderungen, weil nicht nur eine Kollision vermieden werden muss, sondern auch geregelt sein muss, in welcher Reihenfolge Transporteinheiten durch die Weiche fahren dürfen.

In der EP 3 202 612 A1 wird für eine Transporteinheit vorausschauend geprüft, ob ein Stillstandmanöver mit vorgegebener Kinematik durchgeführt werden kann, sodass eine Kollision mit einer davor fahrenden Transporteinheit verhindert werden kann und, falls nicht, das Stillstandmanöver eingeleitet wird. Dabei kann nach dem Ausführen des Stillstandmanövers auch ein erreichter Mindestabstand gefordert sein, in dem auch eine Sicherheitsreserve und auch die Abmessung der Transporteinheit in Bewegungsrichtung abgebildet sein können. Zusätzlich werden in der EP 3 202 612 A1 auch Konfliktzonen um eine Weiche gelegt, in die immer nur eine Transporteinheit fahren darf. Dazu wird gefordert, dass nur für eine Transporteinheit ein Stillstandmanöver innerhalb der Konfliktzone enden darf. Wenn für zwei Transporteinheiten die jeweiligen Stillstandmanöver in der Konfliktzone enden, darf nur eine davon in die Weiche einfahren. Dafür kann für eine Transporteinheit vor einer Weiche auch eine Barriere gesetzt werden, die von der Transporteinheit nicht überfahren wird. Die Barriere kann dann entfernt werden, wenn das Kollisionsrisiko nicht mehr besteht. Es wird jedoch in der EP 3 202 612 A1 davon ausgegangen, dass einer Weiche eine Konfliktzone zugeordnet ist, ohne jedoch auszuführen, wie man zur Konfliktzone gelangt.

Auch die EP 2 639 187 A1 und die EP 2 280 327 A1 erwähnen eine Konfliktzone im Bereich einer Weiche einer Transporteinheit, ohne jedoch auszuführen, wie man zur Konfliktzone gelangt.

Bei Robotern ist eine Kollisionsüberwachung bekannt, beispielsweise aus P Jimenez at a/., "Collision Detection Algorithms for Motion Planning", Robot Motion Panning and Control, Springer Verlag, S.305-343, die während der Bewegung des Roboters eine Kollision mit einem anderen Objekt überprüft. Der Roboter kann dabei mit einem zweidimensionalen Objekt modelliert werden, um die Kollisionsüberwachung zu vereinfachen.

Es ist eine Aufgabe der gegenständlichen Erfindung, ein Verfahren anzugeben, mit dem im Betrieb einer Fördereinrichtung in Form eines Langstatorlinearmotors eine Kollisionszone im Bereich einer Weiche gesetzt werden kann, sodass eine Kollision zweier Transporteinheiten im Weichenbereich sicher vermieden werden kann.

Diese Aufgabe wird mit den kennzeichnenden Merkmalen von Anspruch 1 gelöst. Durch die erfindungsgemäße Festlegung der Kollisionszone im Bereich der Weiche kann sichergestellt werden, dass eine Transporteinheit auf einem Förderabschnitt vor der Kollisionszone gestoppt werden kann und eine andere Transporteinheit auf dem anderen Förderabschnitt sicher durch die Weiche fahren kann, ohne dass es zu einer Kollision zwischen den beiden Transporteinheiten kommt. Dabei wird durch die zweidimensionale Betrachtung der Transporteinheiten auch eine Auslenkung einer Transporteinheit an einem gekrümmten Abschnitt der Förderstrecke im Bereich der Weiche berücksichtigt, die ansonsten zu einer unerwünschten Kollision der Transporteinheiten führen könnte. Hierzu kann eine beliebige Arbitrierungslogik implementiert werden, die den Zugang der Transporteinheiten in die Weiche steuert. Wenn eine Transporteinheit in die Weiche einfährt, wird eine andere Transporteinheit gegebenenfalls vor der Kollisionszone angehalten, solange die Gefahr einer Kollision in der Kollisionszone besteht. Auch für die Erkennung einer Kollisionsgefahr in der Kollisionszone kann mit der erfindungsgemäßen Festlegung der Kollisionszone grundsätzlich eine beliebige geeignete Strategie implementiert werden.

Die zweite Länge der Kollisionszone kann ermittelt werden, indem eine zweite Position der zweiten Transporteinheit als zweidimensionales Objekt am zweiten Förderabschnitt ermittelt wird, die die zweite Transporteinheit einnehmen darf, sodass die erste Transporteinheit als zweidimensionales Objekt (gegebenenfalls unter Berücksichtigung des beförderten Teiles und/oder eines Teileträgers) entlang des ersten Förderabschnittes kollisionsfrei durch die Weiche bewegt werden kann und dass ein Abstand zwischen dieser zweiten Position und dem Weichenbeginn als zweite Länge ermittelt wird. In einer einfacheren Ausgestaltung wird die zweite Länge gleich der ersten Länge gesetzt.

Um die Ermittlung der Längen der Kollisionszone zu vereinfachen, wird als zweidimensionales Objekt für die erste Transporteinheit eine zweidimensionale geometrische Form gewählt, die die Kontur der ersten Transporteinheit umgibt und als zweidimensionales Objekt für die zweite Transporteinheit eine zweidimensionale geometrische Form gewählt, die die Kontur der zweiten Transporteinheit umgibt. Mit solchen definierten, vorzugsweise einfachen, geometrischen Formen, wie beispielsweise Rechtecke, lassen sich Überschneidungen der beiden Transporteinheiten einfacher und schneller ermitteln.

Für eine Optimierung der Weichenfahrt, können für verschiedene Kombinationen von verschiedenen ersten und zweiten Transporteinheiten für eine Weiche verschiedene Kollisionszonen festgelegt werden. Auf diese Weise kann die Kollisionszone optimal an die jeweiligen Transporteinheiten, die durch die Weiche fahren wollen, angepasst werden. In gleicher Weise können für verschiedene Weichen auch verschiedene Kollisionszonen festgelegt werden.

Mit einer festgelegten Kollisionszone, kann die Weichendurchfahrt einfach gesteuert werden, indem einer zweiten Transporteinheit auf dem zweiten Förderabschnitt Zutritt zur Kollisionszone, in der sich die erste Transporteinheit befindet, gestattet wird, wenn ein kollisionsfreies Einfahren der zweiten Transporteinheit in die Kollisionszone möglich ist oder einer ersten Transporteinheit auf dem ersten Förderabschnitt Zutritt zur Kollisionszone, in der sich die zweite Transporteinheit befindet, gestattet wird, wenn ein kollisionsfreies Einfahren der ersten Transporteinheit in die Kollisionszone möglich ist. Damit kann eine Transporteinheit außerhalb der Kollisionszone so lange angehalten werden, bis sichergestellt ist, dass bei Einfahrt in die Weiche keine Kollision auftreten kann. Dazu muss die vorausfahrende Transporteinheit die Weiche nicht schon zwingend verlassen haben, sondern beide Transporteinheiten können gleichzeitig hintereinander durch die Weiche bewegt werden. Um das einfach zu realisieren wird vorzugsweise ein Mindestabstand zwischen der ersten Transporteinheit und der zweiten Transporteinheit festgelegt, der einzuhalten ist, sodass die erste Transporteinheit und die zweite Transporteinheit kollisionsfrei durch die Weiche bewegt werden können, wobei zur Prüfung der Einhaltung des Mindestabstandes die erste Transporteinheit auf dem ersten Förderabschnitt in der Kollisionszone auf den zweiten Förderabschnitt in der Kollisionszone projiziert wird, und/oder umgekehrt. Durch die Projektion reicht die einfache Überprüfung eines Mindestabstandes aus, weil die Transporteinheiten auf demselben Förderabschnitt erscheinen. Für die Kollisionsüberwachung muss damit nicht mehr unterschieden werden, ob die beiden Transporteinheiten im Bereich der Weiche auf demselben Förderabschnitt unterwegs sind, oder auf verschiedenen Förderabschnitten.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig.1 ein Ausführungsbeispiel einer Fördereinrichtung in Form eines Langstatorlinearmotors,
Fig.2 ein Abschnitt der Förderstrecke der Fördereinrichtung mit einer Weiche und mit zwei Transporteinheiten.
Fig.3 einen Querschnitt durch die Förderstrecke und eine Transporteinheit,
Fig.4 eine Kollisionszone einer Weiche,
Fig.5 verschiedene Kollisionszonen für verschiedene Weichengeometrien,
Fig.6 die Projektion einer Transporteinheit auf einen anderen Förderabschnitt in einer Kollisionszone einer Weiche.

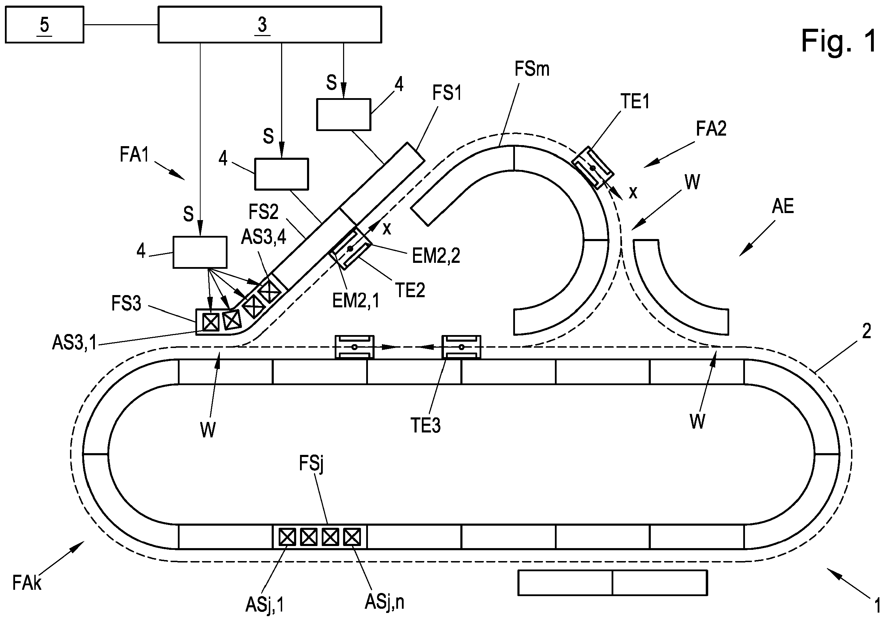

In Fig.1 ist beispielhaft ein beliebiger Aufbau einer Fördereinrichtung 1 mit einer Förderstrecke 2 (angedeutet durch die strichlierte Linie) dargestellt. Die Fördereinrichtung 1 ist als Langstatorlinearmotor ausgeführt und es sind eine Vielzahl von Transporteinheiten TEi, $i \in \mathbb{N}$ vorgesehen, die entlang der Förderstrecke 2 bewegt werden können. Die Förderstrecke 2 wird im Wesentlichen durch den stationären Langstator des Langstatorlinearmotors 1 vorgegeben. Im gezeigten Ausführungsbeispiel sind eine Reihe von Fördersegmente FSj, $j \in \mathbb{N}$ vorgesehen, die die Bahn der Transporteinheiten TEi, also die Förderstrecke 2, definieren.

Einzelne Förderabschnitte FAk, $k \in \mathbb{N}$ der Förderstrecke 2 können durch eine Anzahl von nebeneinander angeordneten Fördersegmente FSj gebildet werden. Die Fördersegmente FSj, und damit auch die Förderabschnitte FAk, bilden dabei einen Teil des Langstators des Langstatorlinearmotors. Die Fördersegmente FSj, oder allgemein die Förderabschnitte FAk, sind an einer geeigneten Konstruktion ortsfest angeordnet und bilden in der Regel auch Führungselemente aus, entlang denen die Transporteinheit TEi geführt und gehalten werden können. Jeder Förderabschnitt FAk umfasst zumindest ein Fördersegment FSj, normalerweise mehrere Fördersegmente FSj. Einzelne Förderabschnitte FAk, bzw. Fördersegmente FSj einzelner Förderabschnitte FAk (wie z.B. die Fördersegmente FS1, FSm), können sich entlang der Förderstrecke 2 in Förderrichtung x an unterschiedlichen Seiten der Transporteinheit TEi zum Teil auch überlappen, insbesondere an Stellen der Förderstrecke 2 an der ein Übergang von einem Förderabschnitt FAk auf einer Seite auf einen anderen Förderabschnitt FAk auf der anderen Seite (wie z.B. vom Förderabschnitt FA1 auf den Förderabschnitt FA2) stattfindet. Es kann auch vorgesehen sein, dass abschnittsweise an beiden Seiten der Förderstrecke 2 Fördersegmente FSj angeordnet sind. Es können auch Weichen W vorgesehen sein, an denen (je nach Förderrichtung einer Transporteinheit TEi) zwei Förderabschnitte FAk zusammengeführt werden oder eine Aufteilung auf zwei Förderabschnitte FAk stattfindet. Es ist nachvollziehbar, dass damit eine nahezu beliebig aufgebaute Förderstrecke 2 gebildet werden kann, die sich auch nicht nur in einer zweidimensionalen Ebene befinden muss, sondern sich auch dreidimensional erstrecken kann.

Jedes Fördersegment FSj umfasst eine Anzahl n von in Förderrichtung x nebeneinander angeordneten Antriebsspulen ASj,n, $j \in \mathbb{N}$, $n \in \mathbb{N}$, wobei die Anzahl n nicht bei jedem Fördersegment FSj gleich sein muss. In Fig.1 sind der Übersicht halber nur Antriebsspulen ASj,n einiger Fördersegmente FSj dargestellt. Jede Transporteinheit TEi umfasst eine Anzahl m von Erregungsmagneten EMi,m, $i \in \mathbb{N}$, $m \in \mathbb{N}$ (Permanentmagnete oder Elektromagnete), vorzugsweise an beiden Seiten (bezogen auf die Förderrichtung x, die durch die Pfeile an den Transporteinheiten TEi angedeutet ist). Die Antriebsspulen ASj,n erzeugen ein bewegtes Magnetfeld und wirken im Betrieb der Fördereinrichtung 1 in bekannter Weise nach dem Motorprinzip mit den Erregungsmagneten EMi,m der Transporteinheiten TEi im Bereich der Antriebsspulen ASj,n zusammen. Werden die Antriebsspulen ASj,n im Bereich einer Transporteinheit TEi durch Anlegen einer Spulenspannung mit einem Spulenstrom bestromt, entsteht ein magnetischer Fluss der in Zusammenwirken mit den Erregungsmagneten EMi,m eine Kraft auf die Transporteinheit TEi bewirkt. Diese Kraft kann je nach Spulenstrom bekanntermaßen eine vortriebskraftbildende und/oder auch eine seitenkraftbildende Kraftkomponente umfassen. Die vortriebskraftbildende Kraftkomponente dient im Wesentlichen der Bewegung der Transporteinheit TEi in Förderrichtung x und die seitenkraftbildende Kraftkomponente kann zur Führung der Transporteinheit TEi, aber auch zur Festlegung der Bahn der Transporteinheit TEi in einer Weiche W, genutzt werden. Auf diese Weise kann jede Transporteinheit TEi einzeln und unabhängig voneinander entlang der Förderstrecke 2 bewegt werden, indem die Antriebsspulen ASj,n im Bereich jeder Transporteinheit TEi gemäß der durchzuführenden Bewegung mit einem entsprechenden Spulenstrom bestromt werden.

Entlang der Förderstrecke 2 kann auch eine Weiche W vorgesehen sein, wo eine Transporteinheit TEi auf verschiedenen Förderabschnitten FAk, FAk+1 weiterbewegt werden kann, oder zwei auf verschiedenen Förderabschnitten FAk, FAk+1 bewegten Transporteinheiten TEi, TEi+1 in der Weiche W auf einen Förderabschnitt zusammengeführt werden.

Diese grundlegende Funktionsweise eines Langstatorlinearmotors ist hinlänglich bekannt, sodass nicht weiter darauf eingegangen wird. Für die gegenständliche Erfindung ist es auch unerheblich, wie die Transporteinheiten TEi, die Förderabschnitte FAk, die Fördersegmente FSj, die Antriebsspulen ASj,n, die Erregungsmagnete EMi,m, usw. konstruktiv konkret ausgestaltet und geformt sind, weshalb auch darauf nicht näher eingegangen wird.

Um die Bewegung der einzelnen Transporteinheiten TEi zu steuern ist eine Transporteinheitenregelung 3 (Hardware und/oder Software) vorgesehen, in der die Sollwerte S für die Bewegung der Transporteinheiten TEi generiert oder ermittelt werden. Selbstverständlich können gleichwertig auch mehrere Transporteinheitenregelungen 3 vorgesehen sein, die jeweils einem Teil der Fördereinrichtung 1, z.B. einem Förderabschnitt FAk, zugeordnet sind und die Bewegung der Transporteinheiten TEi auf diesem Teil kontrollieren. Zusätzlich können noch Segmentregelungseinheiten 4 (Hardware und/oder Software) vorgesehen sein, die einem Fördersegment FSj (oder auch mehreren Fördersegmenten FSj oder auch einem Teil eines Fördersegments FSj) zugeordnet sind und die die Sollwertvorgaben der zugehörigen Transporteinheitenregelung 3 für eine Transporteinheit TEi in Spulenströme für die zugeordneten Antriebsspulen ASj,n, also in konkrete Stellgrößen wie Spulenspannungen, umsetzen. Die Segmentregelungseinheiten 4 könnten aber auch in einer Transporteinheitenregelung 3 implementiert oder integriert sein. Die Stellgrößen können dann in einer nicht dargestellten Leistungselektronik verwendet werden, um eine elektrische Größe, wie z.B. Strom oder Spannung, zu erzeugen und an die Antriebsspulen ASj,n anzulegen. Als Sollwerte S können beispielsweise Positionen p der Transporteinheiten TEi entlang der Förderstrecke 2, oder gleichwertig auch Geschwindigkeiten v, vorgegeben werden. Das bedeutet, dass in jedem Taktschritt der Regelung für jede Transporteinheit TEi ein neuer Sollwert S berechnet oder vorgegeben wird, der durch die Segmentregelungseinheiten 4 eingeregelt wird. In einer Segmentregelungseinheit 4 ist demnach ein geeigneter Regler implementiert, der die Sollwertvorgabe in eine geeignete Stellgröße, beispielsweise in eine Vortriebskraft oder einen Spulenstrom, umsetzt, aus der dann wiederum beispielsweise Spulenspannungen für die einzelnen Antriebsspulen ASj,n ermittelt werden.

Die gewünschte Bewegung der Transporteinheiten TEi entlang der Förderstrecke 2 kann auch durch eine Fördereinrichtungsregelung 5 (Hardware und/oder Software) vorgegeben werden, in der beispielsweise eine Routenberechnung (z.B. welchen Weg soll einer Transporteinheit TEi nehmen?), eine Weichenarbitrierung (z.B. welche Transporteinheit TEi darf in eine Weiche einfahren?), eine Deadlockvermeidung (z.B. blockieren sich zwei Transporteinheiten TEi gegenseitig?), usw. stattfinden kann, um die Transporteinheiten TEi auf gewünschte Weise entlang der Förderstrecke 2 zu bewegen, z.B. um einen Fertigungs-, Montage-, oder anderen Prozess zu realisieren. Diese Bewegungsvorgabe für die Transporteinheiten TEi wird in der Transporteinheitenregelung 3 in Sollwertvorgaben für die Transporteinheiten TEi umgesetzt. Dazu kann einer Transporteinheitenregelung 3 auch ein Bewegungsprofil, z.B. ein Weg-Zeit-Profil, oder eine Zielposition oder eine Zielgeschwindigkeit, aus der dann ein Bewegungsprofil berechnet wird, vorgegeben werden.

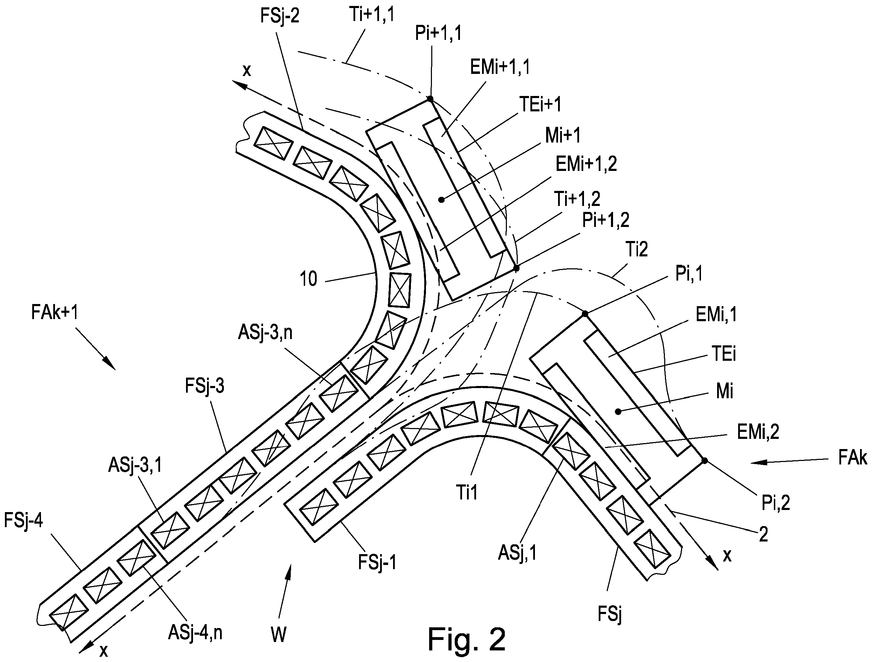

An sich sollte in der Fördereinrichtungsregelung 5 oder der Transporteinheitenregelung 3 sichergestellt werden, dass es auf der Förderstrecke 2 zu keinen unzulässigen Zuständen kommt. Das umfasst in erster Linie die Vermeidung einer Kollision zweier Transporteinheiten TEi auf der Förderstrecke 2. Zur Vermeidung einer Kollision ist insbesondere ein gewisser Mindestabstand M zwischen zwei hintereinander fahrenden Transporteinheiten TEi, TEi+1 einzuhalten. Der Mindestabstand M kann einfach konfiguriert sein und kann auch einen gewissen zusätzlichen Sicherheitsabstand beinhalten, beispielsweise um unvermeidbare Regelfehler abzubilden. Im Bereich einer Weiche W reicht diese Betrachtung allerdings nur, wenn die beiden hintereinander fahrenden Transporteinheiten TEi, TEi+1 auf demselben Förderabschnitt FAk bewegt werden. Bewegen sich zwei Transporteinheiten TEi, TEi+1 im Bereich einer Weiche W auf verschiedenen Förderabschnitten FAk, FAk+1 kommt es bezüglich einer Kollisionsvermeidung aber nicht mehr allein auf einen Abstand zwischen den zwei hintereinander fahrenden Transporteinheiten TEi, TEi+1 an, wie nachfolgend anhand der Fig.2 erläutert wird.

In Fig.2 ist eine Weiche W einer Förderstrecke 2 einer Fördereinrichtung 1 in Form eines Langstatorlinearmotors dargestellt. Dargestellt sind beliebige Förderabschnitte FAk, FAk+1, die über eine Weiche W miteinander verbunden sind. Im Bereich der Weiche W sind damit zumindest abschnittsweise zwei Förderabschnitte FAk, FAk+1 in Förderrichtung x nebeneinander angeordnet. Im dargestellten Ausführungsbeispiel endet der Förderabschnitt FAk im Bereich der Weiche W, was aber natürlich nicht der Fall sein muss. An der Weiche W kann eine auf einem Förderabschnitt FAk+1 in Richtung zur Weiche W fahrende Transporteinheit entweder auf dem ersten Förderabschnitt FAk weiterbewegt werden, oder auf dem zweiten Förderabschnitt FAk+1 weiterbewegt werden - es wird in Folge auch von divergierender Weichenfahrt gesprochen. An der Weiche W können aber auch zwei Transporteinheiten TEi, TEi+1, die auf unterschiedlichen Förderabschnitten FAk, FAk+1 in Richtung der Weiche W bewegt werden (so wie in Fig.2 dargestellt), beide auf dem ersten Förderabschnitt FAk (oder auch auf dem zweiten Förderabschnitt FAk+1 oder auch auf unterschiedlichen Förderabschnitten FAk, FAk+1, falls der zweite Förderabschnitt FAk+1 über den Bereich der Weiche W hinausreicht) bewegt werden - es wird in Folge auch von konvergierender Weichenfahrt gesprochen.

Jeder Förderabschnitt FAk, FAk+1 kann wieder aus Fördersegmenten FSj zusammengestellt sein. An jedem Fördersegment FSj, oder allgemein, entlang der Förderabschnitte FAk, FAk+1 sind wie beschrieben Antriebsspulen ASj,n hintereinander angeordnet. Die Fördersegmente FSj, oder allgemein die Förderabschnitte FAk, FAk+1, sind ortsfest angeordnet.

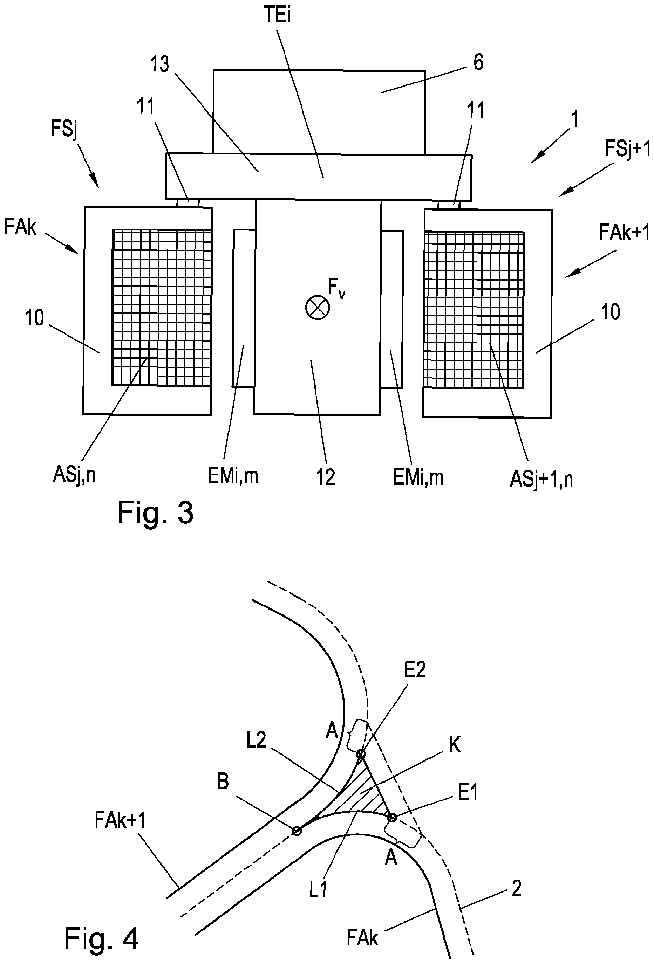

Es ist offensichtlich, dass eine Transporteinheit TEi in Förderrichtung x gesehen an beiden Seiten Erregungsmagnete EMi,m aufweisen muss, um im Weichenbereich B entlang des gewünschten Förderabschnittes FAk, FAk+1 bewegt werden zu können. Eine Transporteinheit TEi ist beispielsweise wie in Fig.3 dargestellt ausgeführt. Fig.3 zeigt einen Querschnitt durch einen beliebigen Teil der Förderstrecke 2 mit Förderabschnitten FAk, FAk+1 an beiden Seiten und einer darauf bewegten Transporteinheit TEi. Eine Transporteinheit TEi besteht im gezeigten Ausführungsbeispiel aus einem Grundkörper 12 und einer daran angeordneten Komponentenaufnahme 13 zur Aufnahme eines zu transportierenden Teiles 6, wobei die Komponentenaufnahme 13 und der Teil 6 grundsätzlich an einer beliebigen Stelle des Grundkörpers 12 angeordnet sein kann, insbesondere auch an der Unterseite für hängende Teile 6. Am Grundkörper 12 ist, bevorzugt an beiden Seiten der Transporteinheit TEi, die Anzahl der Erregungsmagnete EMi,m angeordnet. Die Förderstrecke 2 der Fördereinrichtung 1, bzw. eines Förderabschnitts FAk, FAk+1, wird durch eine stationäre Führungskonstruktion 10 gebildet, an der die Antriebsspulen ASj,n, ASj+1,n angeordnet sind. Der Grundkörper 12 mit den beidseitig angeordneten Erregungsmagnete EMi,m (z.B. Permanentmagnete) ist im gezeigten Ausführungsbeispiel zwischen den Antriebsspulen ASj,n, ASj+1,n angeordnet. Damit ist jeweils zumindest ein Erregungsmagnet EMi,m einer Antriebsspule ASj,n, ASj+1,n (oder einer Gruppe von Antriebsspulen) gegenüberliegend angeordnet und wirkt damit mit zumindest einer Antriebsspule ASj,n, ASj+1,n zur Erzeugung einer Vortriebskraft $F_v$ zusammen. Damit ist die Transporteinheit TEi zwischen der Führungskonstruktion 10 mit den Antriebsspulen ASj,n, ASj+1,n und entlang der Förderstrecke 2 bewegbar. Selbstverständlich sind auch andere Anordnungen der Antriebsspulen ASj,n, ASj+1,n und der damit zusammenwirkenden Erregungsmagnete EMi,m denkbar. Z.B. ist es auch möglich, die Antriebsspulen ASj,n, ASj+1,n innen und die Erregungsmagnete EMi,m nach innen gerichtet und die Antriebsspulen ASj,n, ASj+1,n umgreifend anzuordnen. Gleichfalls können außerhalb einer Weiche W an einem Förderabschnitt FAk, FAk+1 auch nur auf einer Seite (in Förderrichtung x gesehen) Antriebsspulen ASj,n, ASj+1,n auf einer Führungskonstruktion 10 vorgesehen sein.

Am Grundkörper 12 und/oder an der Komponentenaufnahme 13 können natürlich auch noch (hier aus Gründen der Übersichtlichkeit nicht dargestellte oder nur angedeutete) Führungselemente 11, wie Rollen, Räder, Gleitflächen, Magnete, etc., vorgesehen sein, um die Transporteinheit TEi entlang der Transportstrecke 2 zu führen. Die Führungselemente 11 der Transporteinheit TE1 wirken dabei zur Führung mit der stationären Führungskonstruktion 10 zusammen, z.B. in dem sich die Führungselemente 11 an der Führungskonstruktion 10 abstützen, daran abgleiten oder abrollen, etc. Die Führung der Transporteinheit TEi kann aber neben mechanischen Führungen auch (alternativ oder zusätzlich) durch das Vorsehen von Führungsmagneten erfolgen.

Wenn eine Transporteinheit TEi entlang eines gekrümmten Abschnittes der Förderstrecke 2 bewegt wird, wird die an sich starre Transporteinheit TEi aufgrund der Führung am gekrümmten Abschnitt auslenken. Ein beliebiger Punkt Pi,q, $q \in \mathbb{N}$ an der Transporteinheit TEi folgt damit bei Bewegung der Transporteinheit TEi entlang der Förderstrecke 2 einer Trajektorie Ti,q, die im Wesentlichen abhängig ist von den Abmessungen der Transporteinheit TEi und der Krümmung. Verschiedene Punkte Pi,q an der Transporteinheit TEi können dabei natürlich unterschiedliche Trajektorien Ti,q bewirken. In einer Weiche W gibt es immer zumindest einen gekrümmten Abschnitt.

In Fig.2 sind für jede Transporteinheit TEi, TEi+1 jeweils zwei Punkte Pi,1, Pi,2, Pi+1,1, Pi+1,2 und deren Trajektorien Ti,1, Ti,2, Ti+1,1, Ti+1,2 bei einer Fahrt entlang der gekrümmten Abschnitte in der Weiche W dargestellt. Interessant sind dabei natürlich Punkte Pi,q, die Trajektorien Ti,1, Ti,2, Ti+1,1, Ti+1,2 erzeugen, welche die Konfliktzone K, also die Längen L1, L2 maximieren, beispielswiese jene Trajektorien Ti,1, Ti,2, Ti+1,1, Ti+1,2, die als erste eine andere Transporteinheit TEi, TEi+1 schneiden. In Fig.2 sind beispielsweise jeweils die Trajektorien Transporteinheit TEi, TEi+1 eines gegenüber dem Förderabschnitt FAk, FAk+1 liegenden vorderen und hinteren Eckpunkts der Transporteinheiten TEi, TEi+1 dargestellt. Welcher Punkt Pi,q eine interessierende Trajektorie Transporteinheit TEi, TEi+1 ergibt, hängt natürlich von der Gestalt der Transporteinheit TEi. Hierbei ist unter Umständen auch der mit einer Transporteinheit TEi beförderte Teil 6, gegebenenfalls mit Teileträger, zu berücksichtigen. Wenn der Teil 6 oder ein Teileträger über die Transporteinheit TEi hinausragt, dann kann auch der Teil 6 oder der Teileträger eine maximal beabstandete Trajektorie Ti,q erzeugen. Unter einem Punkt Pi,q einer Transporteinheit TEi oder eine Trajektorie Ti,q einer Transporteinheit TEi wird damit auch ein Punkt oder eine Trajektorie des an der Transporteinheit TEi angeordneten Teiles 6 oder eines Teileträgers verstanden. Eine Kollision zweier Transporteinheiten TEi, TEi+1 im Bereich einer Weiche W ist damit dann möglich, wenn eine erste Transporteinheit TEi eine Trajektorie Ti+1,1, Ti+1,2 einer zweiten Transporteinheit TEi+1 schneidet, oder umgekehrt. Dabei ist es unerheblich, ob eine divergierende oder konvergierende Weichenfahrt vorliegt.

Damit kann im Bereich einer Weiche W eine Kollisionszone K (Fig.4) festgelegt werden, innerhalb der es zu einer Kollision zweier Transporteinheiten TEi, TEi+1 im Bereich einer Weiche W kommen kann. Die Kollisionszone K reicht dabei vom Weichenbeginn B des divergierenden Teiles der Weiche W (der anhand der Geometrie der Förderstrecke 2 definiert ist), also dort wo die beiden Förderabschnitte FAk, FAk+1 beginnen auseinanderzugehen, auf jedem Förderabschnitt FAk, FAk+1 der Weiche W eine festzulegende Länge L1, L2 bis jeweils zu einem Ende E1, E2 auf den Förderabschnitten FAk, FAk+1.

Um die Kollisionszone K festzulegen, sind die Längen L1, L2 bzw. die Enden E1, E2 zu bestimmen. Dabei gilt, dass die Längen L1, L2 mindestens so groß sein müssen, dass wenn eine erste Transporteinheit TEi, TEi+1 auf einem ersten Förderabschnitt FAk vor der Kollisionszone K steht, eine zweite Transporteinheit TEi+1 auf dem zweiten Förderabschnitt FAk+1 der Weiche W durch die Weiche W fahren kann, ohne die erste Transporteinheit TEi zu berühren. Dazu werden die Transporteinheiten TEi, TEi+1 als zumindest zweidimensionale Objekte betrachtet, also insbesondere mit einer Länge und einer Breite.

Um die Längen L1, L2 und damit die Enden E1, E2 der Kollisionszone K zu bestimmen, können beispielsweise die maximalen Trajektorien Ti,1, Ti,2, Ti+1,1, Ti+1,2 der Transporteinheiten TEi, TEi+1 im Bereich der Weiche W bestimmt werden und geprüft werden, wo es zu einer Überschneidung einer Trajektorien Ti,1, Ti,2, Ti+1,1, Ti+1,2 mit einer Transporteinheit TEi, TEi+1 als zweidimensionalen Objekt kommt. Die Position an der es erstmals zu keiner Überschneidung kommt kann dann als Ende E1, E2 festgelegt werden. Für die Länge L1 wird beispielsweise überprüft, wo es zu keiner Überschneidung der zweiten Transporteinheit TEi+1 auf dem zweiten Förderabschnitt FAk+1 mit einer Trajektorie Ti,1, Ti,2 der ersten Transporteinheit TEi auf dem ersten Förderabschnitt FAk kommt. Dabei kann es natürlich zu mehreren Überschneidungen und damit zu mehreren Schnittpunkten kommen. Der Abstand (gegebenenfalls als Bogenlänge) dieser Position zum Weichenbeginn B ergibt dann die minimale erste Länge L1, die eingehalten werden muss, um die zweite Transporteinheit TEi+1 kollisionsfrei entlang des zweiten Förderabschnittes FAk+1 durch die Weiche W zu bewegen. Die Länge L1 kann aus Sicherheitsgründen auch größer gewählt werden, was natürlich auch die Position des Endes E1 verschiebt. Für die Länge L2 kann gegebenenfalls analog vorgegangen werden.

Es können aber auch die Bewegungen der beiden Transporteinheiten TEi, TEi+1 als zweidimensionale Objekte durch die Weiche W simuliert werden und dabei überprüft werden, ob und wo sich die beiden Transporteinheiten TEi, TEi+1 überschneiden, woraus wieder die Längen L1, L2 bestimmt werden können.

Für die Bestimmung der Länge L1 auf dem Förderabschnitt FAk im Bereich der Weiche W könnte man aber auch in einer Art binärer Suche vorgehen. Dabei wird eine Transporteinheit TEi als zweidimensionales Objekt auf dem Förderabschnitt FAk in einem Testabstand vom Weichenbeginn B platziert und geprüft, ob die derart platzierte Transporteinheit TEi von einer Transporteinheit TEi+1 auf dem anderen Förderabschnitt FAk+1 als zweidimensionale Objekt oder von einer Trajektorie Ti+1,q einer Transporteinheit TEi+1 auf dem anderen Förderabschnitt FAk+1 bei Bewegung durch die Weiche W geschnitten wird. Das kann natürlich rechnerisch simuliert werden. Der Testabstand bei dem es zu keiner Überschneidung mehr kommt, kann dann als minimale Länge L1 herangezogen werden. Für die Länge L2 kann gegebenenfalls analog vorgegangen werden.

Es ist offensichtlich, dass bei der Ermittlung der Längen L1, L2 nicht zwingendermaßen das gesamte zweidimensionale Objekt berücksichtigt werden muss. In der Regel wird es ausreichend sein, wenn man beispielsweise nur die beiden einander zugewandten Seiten der zweidimensionalen Objekte der Transporteinheiten TEi, TEi+1 betrachtet, weil es im Bereich der Weiche W in der Regel in diesem Bereich zu einer Berührung zwischen den Transporteinheiten TEi, TEi+1 kommen kann. Im Falle von Rechtecken als zweidimensionale Objekte könnte man daher beispielsweise nur die beiden einander zugewandten, in Förderrichtung x ausgerichteten Seiten betrachten. Damit könnte man die Ermittlung der Längen L1, L2 auch vereinfachen. Es sei aber angemerkt, dass die Transporteinheiten TEi, TEi+1 dabei trotzdem als zweidimensionale Objekte modelliert werden, obwohl letztendlich nur zwei Linien betrachtet werden.

Es ist anzumerken, dass der Beginn B und die Längen L1, L2, bzw. die Enden E1, E2, immer auf einen festgelegten Referenzpunkt Mi, Mi+1 der Transporteinheiten TEi, TEi+1 bezogen ist. Der Referenzpunkt Mi, Mi+1 ist vorzugsweise ein Mittelpunkt der Transporteinheiten TEi, TEi+1. Wobei aber der Referenzpunkt Mi, Mi+1 grundsätzlich auch anders gewählt werden kann, beispielsweise ein in Förderrichtung x gesehener vorderster oder hinterster Punkt an der Transporteinheit TEi, TEi+1.

Für die Bestimmung der Längen L1, L2 wird eine Transporteinheit TEi als zumindest zweidimensionales Objekt betrachtet, das durch die Kontur der Transporteinheit TEi bestimmt ist. Um die Suche nach den Längen L1, L2 zu vereinfachen, wird eine bestimmte einfache geometrische zweidimensionale Form, beispielsweise ein Rechteck oder eine konvexe Hülle, um die Transporteinheit TEi, TEi+1 gelegt, die also die Kontur der jeweiligen Transporteinheit TEi, TEi+1 vollständig umgibt, und dann mit dieser einfachen Form als zweidimensionales Objekt die Trajektorien Ti,q ermittelt und/oder Überschneidungen gesucht. Für das zweidimensionale Objekt kann es aber wiederum erforderlich sein, ein Teil 6, das mit der Transporteinheit TEi befördert wird, zu berücksichtigen, insbesondere, wenn der Teil 6 über die Transporteinheit TEi hinausragt. In diesem Fall wird der Teil 6 als Teil der Transporteinheit TEi betrachtet, die vom zweidimensionalen Objekt zu umgeben ist.

Falls Transporteinheiten TEi, TEi+1 mit verschiedenen Geometrien oder Konturen oder auch Teilen 6 (Teileträger) entlang der Förderstrecke 2 bewegt werden, können für verschiedene mögliche Kombinationen von Transporteinheiten TEi, TEi+1 im Bereich einer Weiche W auch verschiedene Kollisionszonen K festgelegt werden. Es kann aber der Einfachheit halber auch die sich ergebende größte Kollisionszone K für alle Transporteinheiten TEi, TEi+1 herangezogen werden.

Eine bestimmte Länge L1, L2 kann auch um einen bestimmten Sicherheitsabstand A (der auch unterschiedlich sein kann) verlängert werden, wie in Fig.4 angedeutet, beispielsweise um mögliche Regelfehler (Schleppfehler) zu berücksichtigen.

Die Längen L1, L2 können, müssen aber nicht gleich sein. In einer vorteilhaften Ausgestaltung werden die Längen L1, L2 aber gleich gewählt. Falls die wie oben beschrieben ermittelten Längen L1, L2 unterschiedlich sind, kann beispielsweise für beide Längen L1, L2 der Maximalwert der ermittelten Längen herangezogen werden.

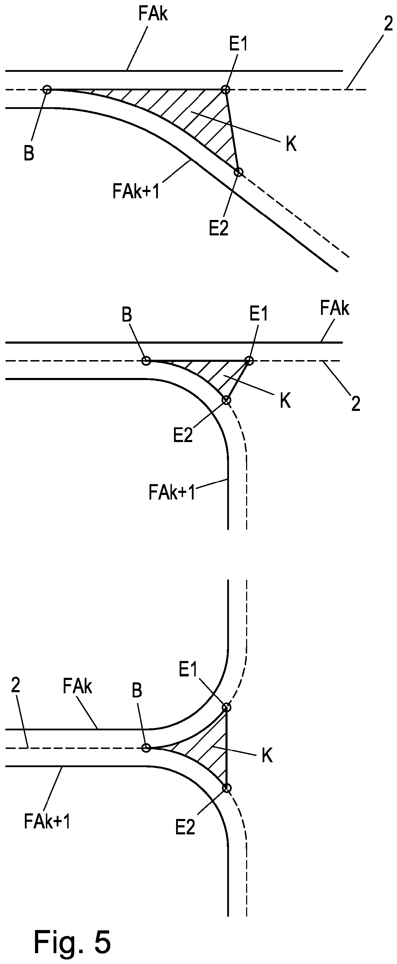

Die Längen L1, L2 sind dabei natürlich nicht nur von den Abmessungen (z.B. Länge und Breite) der Transporteinheiten TEi, TEi+1 abhängig, sondern auch von der Geometrie der Förderstrecke 2, insbesondere der Krümmung der Förderstrecke 2, im Bereich der Weiche W. Damit werden sich in der Regel für verschiedene Weichengeometrien auch verschiedene Längen L1, L2 ergeben, wie in Fig.5 anhand einer 45°, 90° und 180° Weiche dargestellt. Daher werden die Längen L1, L2 vorzugsweise für jede Weiche W mit unterschiedlicher Geometrie bestimmt. In einer einfachen Ausführung kann auch eine maximale Kollisionszone K ermittelt werden, die dann für jede Weiche W herangezogen wird.

Es reicht aber aus, die Kollisionszonen K der verschiedenen Weichen W, und gegebenenfalls auch für die verschiedenen Geometrien der Transporteinheiten TEi, TEi+1, nur einmal zu bestimmen, in der Regel vor Beginn des Betriebs der Fördereinrichtung 1, weil sich dann im laufenden Betrieb nichts mehr daran ändert. Falls im laufenden Betrieb aber Transporteinheiten TEi, TEi+1 mit anderen Geometrien hinzukommen oder andere Teile 6 befördert werden, kann es notwendig sein, die Kollisionszonen K, zumindest teilweise, neu zu bestimmen. Das gleiche gilt, wenn die Fördereinrichtung 1 geändert wird und dabei Weichen W hinzukommen.

Für die Kollisionsüberwachung kann daher mit einer Kollisionsüberwachungseinheit (Hardware und/oder Software) überprüft werden, ob bei einer konvergierenden Weichenfahrt zwei Transporteinheiten TEi, TEi+1 gleichzeitig in eine Weiche W einfahren wollen. Die Kollisionsüberwachungseinheit kann beispielsweise auch in der Transporteinheitenregelung 3 oder der Fördereinrichtungsregelung 5 implementiert oder integriert sein. Falls das erkannt wird, wird nach einer festgelegten Arbitrierungslogik eine der beiden Transporteinheiten TEi, TEi+1 vor der Kollisionszone K angehalten, also z.B. am jeweiligen Ende E1, E2 der Kollisionszone K und gewartet, bis die andere Transporteinheit TEi, TEi+1 die Weiche W durchfahren hat oder ausreichend weit in die Weiche W hineingefahren ist, sodass keine Kollision mehr auftreten kann.

Das kann besonders vorteilhaft implementiert werden, indem ein Mindestabstand M festgelegt ist, der zwischen zwei hintereinander fahrenden Transporteinheiten TEi, TEi+1 einzuhalten ist. Der Mindestabstand M wird dabei wiederum auf einen Referenzpunkt Mi, Mi+1, vorzugsweise wieder den Mittelpunkt, der Transporteinheiten TEi, TEi+1 bezogen, und ergibt sich beispielsweise zumindest aus der Summe der beiden halben Längen der Transporteinheiten TEi, TEi+1 in der Regel zuzüglich eines bestimmten Sicherheitsabstandes. Falls sich eine Transporteinheit TEi vom Referenzpunkt unterschiedlich weit in Förderrichtung x gesehen nach vorne und nach hinten erstreckt, ist für die Ermittlung des Mindestabstandes M natürlich die tatsächliche Erstreckung in Förderrichtung x (nach vorne) oder gegen die Förderrichtung x (nach hinten) heranzuziehen.

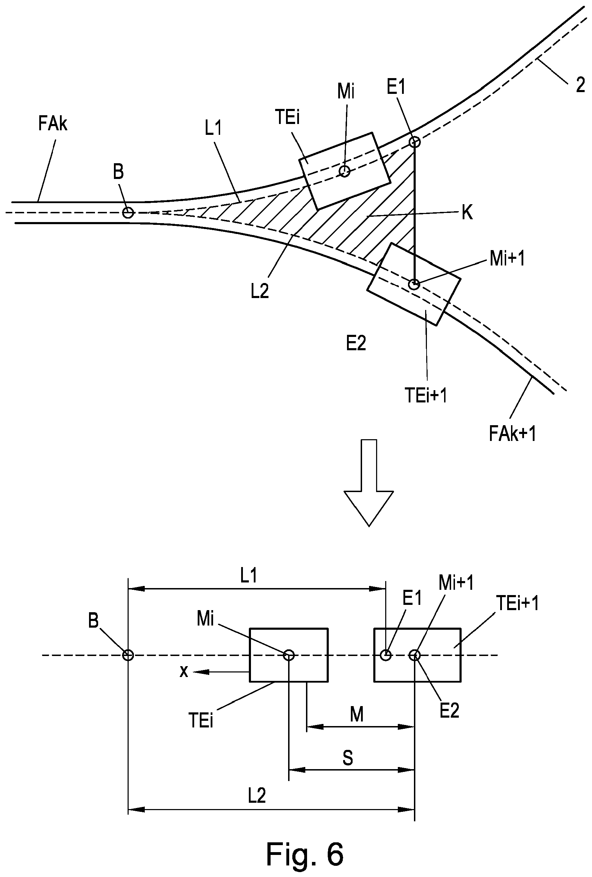

Wenn die beiden Transporteinheiten TEi, TEi+1 im Bereich einer Weiche W auf unterschiedlichen Förderabschnitten FAk, FAk+1 bewegt werden, wie in Fig.6 gezeigt, dann wird eine Transporteinheit TEi auf einem Förderabschnitt FAk, der innerhalb der zugeordneten Kollisionszone K ist, auf den anderen Förderabschnitt FAk+1 im Bereich der Weiche W projiziert, wie in Fig.6 unten dargestellt. Für die Projektion kann beispielsweise die Distanz einer Transporteinheit TEi auf dem Förderabschnitt FAk zum Weichenbeginn B herangezogen werden und diese Transporteinheit TEi mit der derselben Distanz zum Weichenbeginn B auf den anderen Förderabschnitt FAk+1 projiziert werden. Eine Transporteinheit TEi+1 auf dem anderen Förderabschnitt FAk+1 wird damit erst dann in die Weiche W einfahren, wenn der Mindestabstand M zwischen der projizierten Transporteinheit TEi und der Transporteinheit TEi+1 gegeben ist. Die Transporteinheit TEi+1 kann dabei so lange am Ende E2 der Kollisionszone K am Förderabschnitt FAk+1 angehalten werden, bis sich der Mindestabstand M einstellt. Zusätzlich kann dann auch die Einhaltung des Mindestabstandes M im Bereich der Weiche überprüft werden, wobei gelten muss, dass der tatsächliche Abstand S zwischen den beiden Transporteinheiten TEi, TEi+1 oder einer projizierten Transporteinheit TEi und der anderen Transporteinheit TEi+1 größer dem Mindestabstand M ist. Die Abstände werden dabei gegebenenfalls als Bogenlänge verstanden.

Das gilt in analoger Weise auch für eine divergierende Weichenfahrt, wobei eine Transporteinheit TEi+1 dann gegebenenfalls am Beginn B der Kollisionszone K angehalten wird, bis sich der vorgesehene Mindestabstand M in einer Projektion einstellt.

Durch das Vorsehen einer Kollisionszone K und/oder durch die Überprüfung eines Mindestabstandes M auch im Bereich einer Weiche W, können gleichzeitig mehrere Transporteinheiten TEi, TEi+1 im Bereich einer Weiche W bewegt werden. Es muss somit nicht gewartet werden, bis eine erste Transporteinheit TEi eine Weiche W, oder die Kollisionszone K, vollständig durchfahren hat, bis eine zweite Transporteinheit TEi+1 in die Weiche W, oder in die Kollisionszone K der Weiche W, einfahren darf. Auf diese Weise kann der mögliche Förderdurchsatz von Transporteinheiten TEi, TEi+1 der Fördereinrichtung 1 erhöht werden.

Der Mindestabstand M zwischen zwei hintereinander fahrender Transporteinheit TEi im Bereich einer Weiche W kann einfach festgelegt werden, oder kann auch aus der Geometrie der Weiche W und der Förderabschnitte FAk, FAk+1 im Bereich der Weiche W ermittelt werden. Eine Transporteinheit TEi auf einem gekrümmten Abschnitt der Förderstrecke 2 wird auslenken, wodurch sich der Abstand zu einer dahinterfahrenden (oder auch davor fahrenden) Transporteinheit TEi+1 verändern kann. Die Auslenkung hängt dabei natürlich von der Dimension der Transporteinheit TEi und auch von der Geometrie des gekrümmten Abschnittes (insbesondere der Krümmung) ab.

Wenn zwei hintereinanderfahrende Transporteinheiten TEi, TEi+1 in einer Weiche W auf dem gleichen Förderabschnitt FAk unterwegs sind, können somit aus der Geometrie der Transporteinheiten TEi, TEi+1 und der jeweiligen Krümmung des Förderabschnittes FAk an der Stelle der Transporteinheiten TEi, TEi+1 die Auslenkungen ermittelt werden (beispielsweise rechnerisch oder durch Simulation), woraus wiederum ein erster Mindestabstand M1 abgeleitet werden kann, der eingehalten werden muss, sodass sich die beiden Transporteinheiten TEi, TEi+1 dabei nicht berühren. Auf einem geraden Abschnitt ergibt sich damit natürlich ein theoretischer erster Mindestabstand M1, bei dem die beiden Transporteinheiten TEi, TEi+1 unmittelbar hintereinander fahren, weil es keine Auslenkung gibt.

Wenn zwei Transporteinheit TEi, TEi+1 im Bereich der Weiche W auf unterschiedlichen Förderabschnitten FAk, FAk+1 bewegt werden, kann es bei zumindest einer Transporteinheit TEi, TEi+1 aufgrund der Bewegung auf einem gekrümmten Abschnitt wiederum zu einer Auslenkung kommen. Diese Auslenkung kann dazu führen, dass sich der Abstand zwischen den beiden Transporteinheiten TEi, TEi+1 verändert. Dieser Zustand hängt auch von der Geometrie der Weiche W selbst ab, also von der Geometrie der beiden Förderabschnitte FAk, FAk+1 im Bereich der Weiche W. Beispielsweise wird eine Weiche W mit einem geraden Förderabschnitt FAk und einem gekrümmten Förderabschnitt FAk+1 andere Anforderungen an den Mindestabstand M2 haben, als eine Weiche mit zwei gekrümmten Förderabschnitten FAk, FAk+1. Auch dieser durch die Geometrie der Weiche bestimmte zweite Mindestabstand M2 kann rechnerisch oder durch Simulation ermittelt werden.

Für die Kollisionsvermeidung im Bereich der Weiche W kann dann für eine bestimmte Kombination von Transporteinheiten TEi, TEi+1 der größere der beiden Mindestabstände M1, M2 als Mindestabstand M herangezogen werden. Alternativ könnte man aber auch die beiden Fälle unterscheiden und den jeweils passenden Mindestabstand M für die Weichenfahrt heranziehen.

Es sei an dieser Stelle noch angemerkt, dass in einem Langstatorlinearmotor die Position jeder Transporteinheit TEi, TEi+1 zu jedem Zeitpunkt bekannt ist, beispielsweise in einer Transporteinheitenregelung 3, Fördereinrichtungsregelung 5 und/oder Segmentregelungseinheit 4, sodass einfach auch Abstände zwischen zwei hintereinander fahrender Transporteinheit TEi, TEi+1 ermittelt werden können. Die aktuellen Positionen werden beispielsweise anhand von Positionssensoren entlang der Förderstrecke 2 ermittelt.

Die Kollisionsüberwachung außerhalb einer Weiche W bzw. außerhalb einer Kollisionszone K, kann natürlich ebenso implementiert sein, indem die Einhaltung eines vorgegebenen Mindestabstandes M zwischen zwei hintereinander fahrenden Transporteinheiten TEi, TEi+1 überprüft wird. Der Mindestabstand M außerhalb der Weiche W kann dabei festgelegt sein, kann aber auch anderweitig ermittelt werden, wie nachfolgend beschrieben wird.

Auch außerhalb einer Weiche W kann sich durch die Auslenkung einer Transporteinheit TEi an einem gekrümmten Abschnitt, beispielsweise einer Kurve, der Abstand zwischen der Transporteinheit TEi und einer dahinter fahrenden Transporteinheit TEi+1 verkleinern. Die gleiche Situation ergibt sich aber auch, wenn die vorausfahrende Transporteinheit TEi auf einem geraden Abschnitt bewegt wird, die dahinter fahrende Transporteinheit TEi+1 aber auf einem gekrümmten Abschnitt. Auch hierbei können sich alleine durch die Auslenkung der Transporteinheit TEi+1 auf dem gekrümmten Abschnitt die beiden Transporteinheiten TEi, TEi+1 näher kommen, sodass eine Kollision möglicherweise nicht vermieden werden kann. Aber auch wenn die beiden Transporteinheiten TEi, TEi+1 beide auf einem gekrümmten Abschnitt bewegt werden, kann sich diese Situation ergeben, dass sich durch die Auslenkung einer (oder auch beiden) Transporteinheit TEi, TEi+1 eine unerwünschte Annäherung der beiden Transporteinheit TEi, TEi+1 ergibt, beispielsweise wenn die Krümmungen an der jeweiligen Position der Transporteinheiten TEi, TEi+1 nicht gleich sind (was auch den Fall unterschiedlicher Vorzeichen der Krümmungen einschließt). Dabei kann auch der Fall eintreten, dass sich die beiden Transporteinheiten TEi, TEi+1 alleine durch die Auslenkung näher kommen, sodass eine Kollision möglicherweise nicht vermieden werden kann.

Um in diesen Situationen außerhalb einer Weiche W eine mögliche Kollision zwischen der vorausfahrenden Transporteinheit TEi und einer nachfolgenden Transporteinheit TEi+1 zu vermeiden, kann der einzuhaltende Mindestabstand M zwischen den beiden Transporteinheiten TEi, TEi+1 positionsabhängig vergrößert werden, um die Auslenkung auszugleichen. Es kann daher der Mindestabstand M zwischen zwei hintereinander fahrenden Transporteinheiten TEi, TEi+1 von der Position entlang der Förderstrecke 2 abhängig gemacht. Der Mindestabstand M ändert sich damit dynamisch im Betrieb der Fördereinrichtung 1. Damit kann der einzuhaltende Mindestabstand M zwischen zwei Transporteinheiten TEi, TEi+1, die beide auf einem geraden Abschnitt bewegt werden, beispielsweise kleiner sein, als ein einzuhaltender Mindestabstand M zwischen zwei Transporteinheit TEi, TEi+1, wobei zumindest eine der beiden Transporteinheiten TEi, TEi+1 auf einem gekrümmten Abschnitt bewegt wird.

Dabei kann es natürlich sein, dass der Mindestabstand M nicht nur von der Position der beiden Transporteinheiten TEi, TEi+1 entlang der Förderstrecke 2 abhängig sein kann, sondern auch von den Abmessungen (insbesondere Länge und Breite) der Transporteinheiten TEi, TEi+1. Transporteinheiten TEi, TEi+1 mit unterschiedlichen Längen und/oder mit unterschiedlichen Breiten oder Formen können natürlich in gekrümmten Abschnitten unterschiedliche Auslenkungen bewirken, was im einzuhaltenden Mindestabstand M berücksichtigt werden kann.

**Patentansprüche**

1.  Verfahren zum Betreiben einer Fördereinrichtung (1) in Form eines Langstatorlinearmotors mit einer Förderstrecke (2) mit zumindest einer Weiche (W), mit der ein erster Förderabschnitt (FAk) der Förderstrecke (2) mit einem zweiten Förderabschnitt (FAk+1) der Förderstrecke (2) verbunden wird und der erste Förderabschnitt (FAk) und der zweite Förderabschnitt (FAk+1) im Bereich der Weiche (W) ab einem Weichenbeginn (B) divergieren, wobei entlang der Förderstrecke (2) eine erste Transporteinheit (TEi) und eine zweite Transporteinheit (TEi+1) bewegt werden und zur Vermeidung von Kollisionen zwischen der ersten Transporteinheit (TEi) und der zweiten Transporteinheit (TEi+1) im Bereich der Weiche (W) eine Kollisionszone (K) festgelegt wird, in der Gefahr einer Kollision zwischen der ersten Transporteinheit (TEi) und der zweiten Transporteinheit (TEi+1) besteht, **dadurch gekennzeichnet, dass** sich die Kollisionszone (K) vom Weichenbeginn (B) eine erste Länge (L1) bis zu einem ersten Ende (E1) am ersten Förderabschnitt (FAk) und eine zweite Länge (L2) bis zu einem zweiten Ende (E2) am zweiten Förderabschnitt (FAk+1) erstreckt, **dass** die erste Transporteinheit (TEi) am ersten Förderabschnitt (FAk) und die zweite Transporteinheit (TEi+1) am zweiten Förderabschnitt (FAk+1) als zweidimensionale Objekte modelliert werden, **dass** als zweidimensionales Objekt für die erste Transporteinheit (TEi) eine zweidimensionale geometrische Form gewählt wird, die die Kontur der ersten Transporteinheit (TEi) umgibt und als zweidimensionales Objekt für die zweite Transporteinheit (TEi+1) eine zweidimensionale geometrische Form gewählt wird, die die Kontur der zweiten Transporteinheit (TEi+1) umgibt, **dass** mit zumindest einem Teil des die erste Transporteinheit (TEi) modellierenden zweidimensionalen Objektes eine erste Position am ersten Förderabschnitt (FAk) ermittelt wird, die die erste Transporteinheit (FAk) einnehmen darf, sodass die als zweidimensionales Objekt modellierte zweite Transporteinheit (TEi+1) entlang des zweiten Förderabschnittes (FAk+1) kollisionsfrei durch die Weiche (W) bewegt werden kann **und dass** ein Abstand zwischen dieser ersten Position und dem Weichenbeginn (B) ermittelt wird und als erste Länge (L1) dieser Abstand verwendet wird.

2.  Verfahren nach Anspruch 1, **dadurch gekennzeichnet, dass** eine zweite Position der zweiten Transporteinheit (TEi+1) als zweidimensionales Objekt am zweiten Förderabschnitt (FAk+1) ermittelt wird, die die zweite Transporteinheit (TEi+1) einnehmen darf, sodass die erste Transporteinheit (TEi) als zweidimensionales Objekt entlang des ersten Förderabschnittes (FAk) kollisionsfrei durch die Weiche (W) bewegt werden kann **und dass** ein Abstand zwischen dieser zweiten Position und dem Weichenbeginn (B) ermittelt wird und als zweite Länge (L2) mindestens dieser Abstand verwendet wird.

3.  Verfahren nach Anspruch 1, **dadurch gekennzeichnet, dass** die zweite Länge (L2) gleich der ersten Länge (L1) gesetzt wird.

4.  Verfahren nach einem der Ansprüche 1 bis 3, **dadurch gekennzeichnet, dass** die erste Transporteinheit (TEi) mit einem damit beförderten Teil (6) und/oder die zweite Transporteinheit (TEi+1) mit einem damit beförderten Teil (6) als zweidimensionale Objekte modelliert werden.

5.  Verfahren nach einem der Ansprüche 1 bis 4, **dadurch gekennzeichnet, dass** für verschiedene Kombinationen von verschiedenen ersten und zweiten Transporteinheiten (TEi, TEi+1) für eine Weiche (W) verschiedene Kollisionszonen (K) festgelegt werden.

6.  Verfahren nach einem der Ansprüche 1 bis 5, **dadurch gekennzeichnet, dass** für verschiedene Weichen (W) verschiedene Kollisionszonen (K) festgelegt werden.

7.  Verfahren nach einem der Ansprüche 1 bis 6, **dadurch gekennzeichnet, dass** einer zweiten Transporteinheit (TEi+1) auf dem zweiten Förderabschnitt (FAk+1) Zutritt zur Kollisionszone (K), in der sich die erste Transporteinheit (TEi) befindet, gestattet wird, wenn ein kollisionsfreies Einfahren der zweiten Transporteinheit (TEi+1) in die Kollisionszone (K) möglich ist oder einer ersten Transporteinheit (TEi) auf dem ersten Förderabschnitt (FAk) Zutritt zur Kollisionszone (K), in der sich die zweite Transporteinheit (TEi+1) befindet, gestattet wird, wenn ein kollisionsfreies Einfahren der ersten Transporteinheit (TEi) in die Kollisionszone (K) möglich ist.

8.  Verfahren nach Anspruch 7, **dadurch gekennzeichnet, dass** ein Mindestabstand (M) zwischen der ersten Transporteinheit (TEi) und der zweiten Transporteinheit (TEi+1) festgelegt wird, der einzuhalten ist, sodass die erste Transporteinheit (TEi) und die zweite Transporteinheit (TEi+1) kollisionsfrei durch die Weiche (W) bewegt werden können, wobei zur Prüfung der Einhaltung des Mindestabstandes (M) die erste Transporteinheit (TEi) auf dem ersten Förderabschnitt (FAk) in der Kollisionszone (K) auf den zweiten Förderabschnitt (FAk+1) in der Kollisionszone (K) projiziert wird, und/oder die zweite Transporteinheit (TEi+1) auf dem zweite Förderabschnitt (FAk+1) in der Kollisionszone (K) auf den ersten Förderabschnitt (FAk) in der Kollisionszone (K) projiziert wird.

9. Verfahren nach Anspruch 8, **dadurch gekennzeichnet, dass** der Mindestabstand (M) in Abhängigkeit von der Geometrie des ersten oder zweiten Förderabschnittes (FAk, FAk+1) im Bereich der Weiche (W) und/oder in Abhängigkeit von der Geometrie der Weiche (W) festgelegt wird.

10. Verfahren nach Anspruch 8 oder 9, **dadurch gekennzeichnet, dass** für verschiedene Kombinationen verschiedener erster und zweiter Transporteinheiten (TEi, TEi+1) unterschiedliche Mindestabstände (M) festgelegt werden.


**Claims**

1. Method for operating a conveyor (1) in the form of a long stator linear motor having a conveying path (2) with at least one switch (W), with which a first conveyor section (FAk) of the conveyor path (2) is connected to a second conveyor section (FAk+1) of the conveyor path (2) and the first conveyor section (FAk) and the second conveyor section (FAk+1) diverge from the beginning (B) of a switch (W) in the region of the switch (W), wherein along the conveying path (2) a first transport unit (TEi) and a second transport unit (TEi+1) are moved and to avoid collisions between the first transport unit (TEi) and the second transport unit (TEi+1) a collision zone (K) is set in the region of the switch (W), in which there is a risk of collision between the first transport unit (TEi) and the second transport unit (TEi+1), **characterized in that** the collision zone (K) extends from the beginning (B) of the switch (W) with a first length (L1) to a first end (E1) at the first conveyor section (FAK) and extends with a second length (L2) to a second end (E2), at the second conveyor section (FAk+1), **that** the first transport unit (TEi) on the first conveyor section (FAK) and second transport unit (TEi+1) on the second conveyor section (FAk+1) are modeled as two-dimensional objects, **that** a two-dimensional geometric shape is selected as two-dimensional object for the first transport unit (TEi) which surrounds the contour of the first transport unit (TEi) and a two-dimensional shape is selected as two-dimensional object for the second transport unit (TEi+1) which surrounds the contour of the second transport unit (TE+1), **that** with at least a part of the two-dimensional object modelling the first transport unit (TEi) a first position on the first conveyor section (FAk) is determined that the first transport unit (FAk) may occupy, so that the second transport unit (TEi+1) modeled as a two-dimensional object can be moved along the second conveyor section (FAk+1) collision-free through the switch (W) **and that** a distance between this first position and the beginning (B) of the switch (W) is determined and this distance is used as the first length (L1).

2. The method according to claim 1, **characterized in that** a second position of the second transport unit (TEi+1) is determined as a two-dimensional object on the second conveyor section (FAk+1) that the second transport unit (TEi+1) is allowed to occupy, so that the first transport unit (TEi) as a two-dimensional object can be moved along the first conveyor section (FAk) collision-free through the switch (W) **and that** a distance between this second position and the beginning (B) of the switch (W) is determined and at least this distance is used as the second length (L2).

3. The method according to claim 1, **characterized in that** the second length (L2) is set equal to the first length (L1).

4. The method according to any of claims 1 to 3, **characterized in that** the first transport unit (TEi) with a part (6) conveyed by it and/or the second transport unit (TEi+1) with part (6) conveyed by it are modelled as two-dimensional objects.

5. The method according to any of claims 1 to 4, **characterized in that** for different combinations of different first and second transport units (TEi, TEi+1) different collision zones (K) are set for a switch (W).

6. The method according to any of claims 1 to 5, **characterized in that** for different switches (W), different collision zones (K) are defined.

7. The method according to any of claims 1 to 6, **characterized in that** a second transport unit (TEi+1) is allowed access to the collisions zone (K) on the second conveyor section (FAk+1) in which the first transport unit (TEi) is located, when a collision-free movement of the second transport unit (TEi+1) into the collision zone (K) is possible or a first transport unit (TEi) is allowed access to the collision zone (K), in which the second transport unit (TEi+1) is located, when collision-free movement of the first transport unit (TEi) into the collision zone (K) is possible.

8. The method according to claim 7, **characterized in that** a minimum distance (M) between the first transport unit (TEi) and the second transport unit (TEi+1) is set, which must be complied with so that the first transport unit (TEi) and the second transport unit (TEi+1) can be moved collision-free through the switch (W), wherein to check compliance with the minimum distance (M), the first transport unit (TEi) on the first conveyor section (FAk) in the collision zone (K) is projected onto the second conveyor section (FAk+1) in the collision zone (K), and/or the second transport unit (TEi+1) on the second conveyor section (FAk+1) in the collision zone (K) is projected onto the first conveyor section (FAk) in the collision zone (K).

9. The method according to claim 8, **characterized in that** the minimum distance (M) is determined depending on the geometry of the first or second conveyor section (FAk, FAk+1) in the region of the switch (W) and/or depending on the geometry of the switch (W).

10. The method according to claim 8 or 9, **characterized in that** for different combinations of different first and second transport units (TEi, TEi+1) different minimum distances (M) are set.

## Revendications

1. Procédé de fonctionnement d'un dispositif de convoyage (1) sous la forme d'un moteur linéaire à stator long comportant une voie de convoyage (2) comportant au moins un aiguillage (W), avec lequel une première section de convoyage (FAk) de la voie de convoyage (2) est reliée à une seconde section de convoyage (FAk + 1) de la voie de convoyage (2) et la première section de convoyage (FAk) et la seconde section de convoyage (FAk + 1) divergent dans la zone de l'aiguillage (W) à partir d'un début d'aiguillage (B), dans lequel une première unité de transport (TEi) et une seconde unité de transport (TEi + 1) sont déplacées le long de la voie de convoyage (2) et une zone de collision (K) est définie dans la zone de l'aiguillage (W) afin d'éviter des collisions entre la première unité de transport (TEi) et la seconde unité de transport (TEi + 1), existant en cas de risque de collision entre la première unité de transport (TEi) et la seconde unité de transport (TEi + 1), **caractérisé en ce que** la zone de collision (K) s'étend, depuis le début d'aiguillage (B), sur une première longueur (L1) jusqu'à une première extrémité (E1) au niveau de la première section de convoyage (FAk) et sur une seconde longueur (L2) jusqu'à une seconde extrémité (E2) au niveau de la seconde section de convoyage (FAk + 1), **en ce que** la première unité de transport (TEi) est modélisée en tant qu'objet bidimensionnel au niveau de la première section de convoyage (FAk) et la seconde unité de transport (TEi + 1) est modélisée en tant qu'objet bidimensionnel au niveau de la seconde section de convoyage (FAk + 1), **en ce qu'**une forme géométrique bidimensionnelle est sélectionnée en tant qu'objet bidimensionnel pour la première unité de transport (TEi), ladite forme entourant le contour de la première unité de transport (TEi), et une forme géométrique bidimensionnelle est sélectionnée en tant qu'objet bidimensionnel pour la seconde unité de transport (TEi + 1), ladite forme entourant le contour de la seconde unité de transport (TEi + 1), **en ce qu'**une première position au niveau de la première section de convoyage (FAk), laquelle est autorisée à occuper la première unité de convoyage (FAk), est déterminée avec au moins une partie de l'objet bidimensionnel modélisant la première unité de transport (TEi) de telle sorte que la seconde unité de transport (TEi + 1) modélisée en tant qu'objet bidimensionnel peut être déplacée à travers l'aiguillage (W) le long de la seconde section de convoyage (FAk + 1) sans collision **et en ce qu'**une distance entre ladite première position et le début d'aiguillage (B) est déterminée et ladite distance est utilisée en tant que première longueur (L1).

2. Procédé selon la revendication 1, **caractérisé en ce qu'**une seconde position de la seconde unité de transport (TEi + 1), laquelle est autorisée à occuper la seconde unité de transport (TEi + 1), est déterminée en tant qu'objet bidimensionnel au niveau de la seconde section de convoyage (FAk + 1) de telle sorte que la première unité de transport (TEi) peut être déplacée en tant qu'objet bidimensionnel à travers l'aiguillage (W) le long de la première section de convoyage (FAk) sans collision **et en ce qu'**une distance entre ladite seconde position et le début d'aiguillage (B) est déterminée et au moins ladite distance est utilisée en tant que seconde longueur (L2).

3. Procédé selon la revendication 1, **caractérisé en ce que** la seconde longueur (L2) est réglée comme égale à la première longueur (L1).

4. Procédé selon l'une quelconque des revendications 1 à 3, **caractérisé en ce que** la première unité de transport (TEi) est modélisée en tant qu'objet bidimensionnel avec une partie (6) convoyée avec celle-ci et/ou la seconde unité de transport (TEi + 1) est modélisée en tant qu'objet bidimensionnel avec une partie (6) convoyée avec celle-ci.

5. Procédé selon l'une quelconque des revendications 1 à 4, **caractérisé en ce que** différentes zones de collision (K) sont définies pour différentes combinaisons de différentes première et seconde unités de transport (TEi, TEi + 1) pour un aiguillage (W).

6. Procédé selon l'une quelconque des revendications 1 à 5, **caractérisé en ce que** différentes zones de collision (K) sont définies pour différents aiguillages (W).

7. Procédé selon l'une quelconque des revendications 1 à 6, **caractérisé en ce qu'**une seconde unité de transport (TEi + 1) sur la seconde section de convoyage (FAk + 1) est autorisée à accéder à la zone de collision (K), dans laquelle se trouve la première unité de transport (TEi), si une entrée sans collision de la seconde unité de transport (TEi + 1) dans la zone de collision (K) est possible ou une première unité de transport (TEi) sur la première section de convoyage (FAk) est autorisée à accéder à la zone de collision (K), dans laquelle se trouve la seconde unité de transport (TEi + 1), si une entrée sans collision de la première unité de transport (TEi) dans la zone de collision (K) est possible.

8. Procédé selon la revendication 7, **caractérisé en ce qu'**une distance minimale (M) entre la première unité de transport (TEi) et la seconde unité de transport (TEi + 1) est définie, laquelle doit être respectée de telle sorte que la première unité de transport (TEi) et la seconde unité de transport (TEi + 1) peuvent être déplacées sans collision à travers l'aiguillage (W), dans lequel la première unité de transport (TEi) sur la première section de convoyage (FAk) dans la zone de collision (K) est projetée sur la seconde section de convoyage (FAk + 1) dans la zone de collision (K), et/ou la seconde unité de transport (TEi + 1) sur la seconde section de convoyage (FAk + 1) dans la zone de collision (K) est projetée sur la première section de convoyage (FAk) dans la zone de collision (K), afin de vérifier le respect de la distance minimale (M).

9. Procédé selon la revendication 8, **caractérisé en ce que** la distance minimale (M) est définie en fonction de la géométrie de la première ou de la seconde section de convoyage (FAk, FAk + 1) dans la zone de l'aiguillage (W) et/ou en fonction de la géométrie de l'aiguillage (W).

10. Procédé selon la revendication 8 ou 9, **caractérisé en ce que** différentes distances minimales (M) sont définies pour différentes combinaisons de différentes première et seconde unités de transport (TEi, TEi + 1).

Fig. 1

EP 3 599 126 B1

Fig. 2

TEi

13

11                                                    6

FSj                                                    1        FSj+1

FAk                                                             FAk+1

10                    $F_v$                                     10

ASj,n        EMi,m        12        EMi,m        ASj+1,n

## Fig. 3

E2

L2        A        K

B                              E1

FAk+1

L1        A

                    2

Fig. 4        FAk

FAk

E1

2

B

K

FAk+1

E2

B

E1

FAk

K

2

E2

FAk+1

2

FAk

B

E1

K

FAk+1

E2

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3202612 A1
- EP 2639187 A1
- EP 2280327 A1

**In der Beschreibung aufgeführte Nicht-Patentliteratur**

- Collision Detection Algorithms for Motion Planning. **P JIMENEZ.** Robot Motion Panning and Control. Springer Verlag, 305-343